# EUROPEAN PATENT APPLICATION

(11) **EP 2 068 412 A2**
(43) Date of publication of application: **10.06.2009**
(21) Application number: 08170070.0
(22) Date of filing: 27.11.2008
(51) Int. Cl.: H02G 5/00

(54) **System and method for securing a busway housing to busway power conductors**

(30) Priority: 05.12.2007 US 950940
(71) Applicant: General Electric Company, Schenectady, NY 12345 (US)
(72) Inventor: Bhathija, Kuldeep Kumar, 500003 Andhra Pradesh (IN); Cox, Jeffery, Selmer, TN 38375 (US); Richard, Steven E., Selmer, TN 38375 (US)
(74) Representative: Illingworth-Law, William Illingworth

(57) **Abstract**

A power busway assembly includes a pair of opposing non-ferrous metal apertured side plates. The side plates have a U-shaped configuration and include a pair of top and bottom flanges that are joined by a flat piece. The power busway assembly further includes a means on one end of each of the flanges for interlocking the side plates together. The interlocking means intern has an angulated projection or an angulated slot. First rails extending from one of the pairs of flanges are also included that provide hanger support connection means. In addition, second rails extending from another one of the pairs of flanges are included that provide ground stab connection means. The power busway assembly further includes at least one brace that is interconnected with the flanges. The brace is dimensioned and configured to bias the interlocking means together. A method of securing a busway housing to busway power conductors is also presented.

## Description

### Background of the Invention

### Field of the Invention

The subject matter described herein relates generally to power busways and, more particularly, to securing a busway housing to busway power conductors.

### Related Art

Power busways used within multi-phase electric power distribution systems generally consist of long, rectangular bars of copper or aluminum material. Each individual bar is electrically insulated to maintain electrical isolation between the individual phases as well as between the phase conductors and the neutral conductors. In accordance with electrical codes, a ground conductor must be associated within the busway power distribution system.

U.S. Patent No. 4,804,804 entitled "Thermally Efficient Power Busway Housing" describes a two-piece extruded aluminum alloy housing shaped to provide support and ground conduction facility to power busway conductors described above. The two-piece housing is attached together with snap-fit connectors along its top and bottom surfaces. The housing is attached to the busway power conductors by means of insulated bolts.

General Electric's Spectra^{™} Series Busway uses a unique double-insulated tie bolt to attach the aluminum housing to the busway power conductors. The tie bolts are inserted through the center of the busway providing predictable consistent strength and high short circuit rating.

While it is effective to use insulated bolts to secure a busway assembly, a large number of bolts are necessary. Furthermore, using bolts complicates the art of busway construction as the bolts themselves may not come in contact with any part of the bus conductors since the busway housing is generally at ground potential. Therefore, it is desirable to provide an improved means for securing a busway assembly that eliminates the use of bolts, uses fewer components, but still provides predictable consistent strength and high short circuit rating.

### Brief Description of the Invention

In accordance with an embodiment of the present invention, a power busway assembly comprises a pair of opposing non-ferrous metal apertured side plates. The side plates have a U-shaped configuration and intern comprise a pair of top and bottom flanges that are joined by a flat piece. The power busway assembly further comprises a means on one end of each of the flanges for interlocking the side plates together. The interlocking means intern comprises an angulated projection or an angulated slot. First rails extending from one of the pairs of flanges are also included that provide hanger support connection means. In addition, second rails extending from another one of the pairs of flanges are included that provide ground stab connection means. The power busway assembly further comprises at least one brace that is interconnected with the flanges. The brace is dimensioned and configured to bias the interlocking means together.

In another embodiment of the invention, a method of securing a busway housing to busway power conductors comprises using a plurality of braces. The busway housing comprises a pair of opposing non-ferrous metal apertured side plates. The side plates have a U-shaped configuration and intern comprise a pair of top and bottom flanges that are joined by a flat piece. The top and bottom flanges comprise slits, and the plurality of braces comprises a hooked end and a flanged end. The method comprises inserting the hooked end into one of the slits, and rotating the brace until the flanged end is adjacent to another of the slits. The method further comprises providing an axial force to the flanged end, wherein the force is perpendicular to the side plates, and whereby the flanged end completely engages the another of the slits.

### Brief Description of the Drawings

The following detailed description is made with reference to the accompanying drawings, in which:

FIG. 1 is a perspective view of a busway housing unit for supporting the bus bar power conductors.

FIG. 2 is a perspective view of a brace in accordance with one embodiment of the present invention.

FIG. 2A is a bottom view of the brace shown in FIG. 2.

FIG. 2B is a side view of the brace shown in FIG. 2.

FIG. 3 is a cross-sectional view along line 3-3 in FIG. 1 of the busway housing unit of FIG. 1 including a plurality of the braces of FIG. 2.

FIG. 4 is a perspective view of a bracket according to another aspect of the present invention.

FIG. 4A is a side view of the bracket shown in FIG. 4.

FIG. 4B is an end view of a portion of the bracket shown in FIG. 4 showing a flange and a catch.

FIG. 5 is a perspective view of a bracket according to a further aspect of the present invention.

FIG. 5A is a side view of the bracket shown in FIG. 5.

FIG. 5B is an end view of a portion of the bracket shown in FIG. 5 showing a flange and a catch.

FIG. 6 is a view similar to that of FIG. 3 including a plurality of brackets.

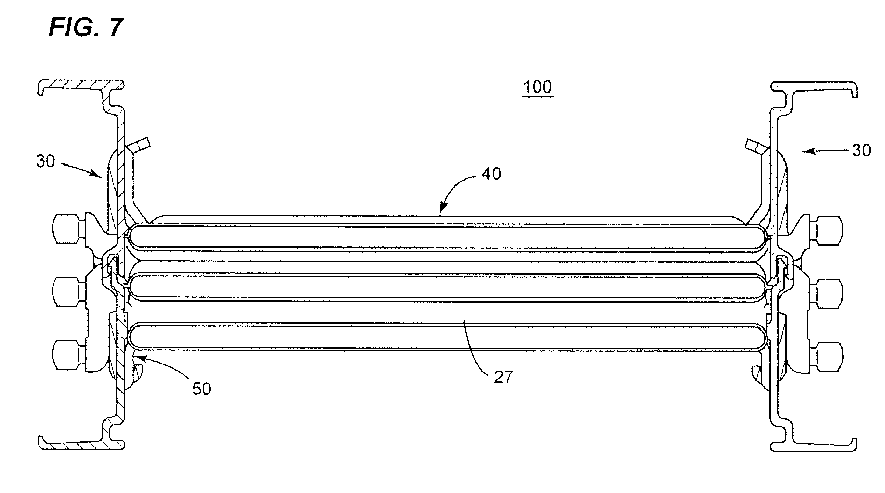

FIG. 7 is a view similar to that of FIG. 6 including bus bar power conductors.

FIG. 8 is an enlarged, partial perspective view of a power busway assembly shown in FIG. 7.

### Detailed Description of the Preferred Embodiment

An embodiment of the present invention concerns a system and method for securing a power busway assembly that reduces the need for the use of fasteners, employs fewer components, yet still provides predictable consistent strength and high short circuit rating.

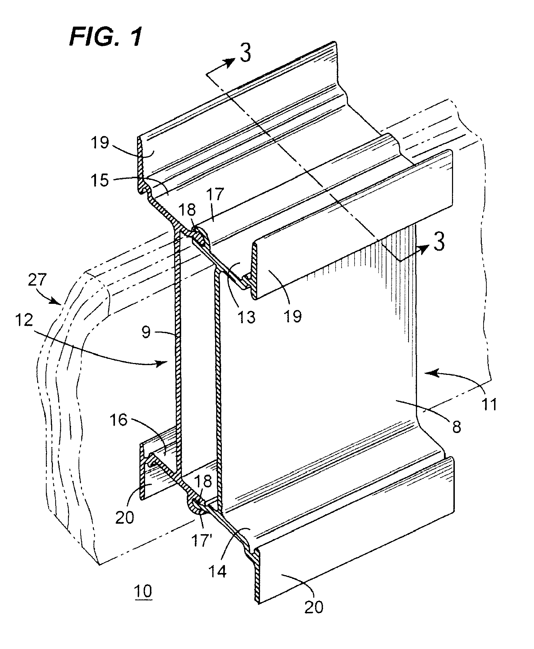

A prior art busway housing unit is shown generally at 10 in FIG. 1. Housing unit 10 comprises a side plate or side piece 11 positioned opposite a complementary side plate or side piece 12. Side plates 11, 12 each are illustrated as having a U-shaped configuration, may include apertures (not shown) and comprise a non-ferrous metal, such as, an aluminum alloy that greatly increases the tensile strength of the aluminum without substantially deterring from the good electrical and thermal properties. The aluminum side plates 11, 12, which form busway housing 10, create a complete 360° high level ground path for ground faults and serves as a continuous bond between busway sections, fittings and bus plugs (not shown).

Both aluminum side plates 11, 12 are provided with a top flange 13, 15 and a bottom flange 14, 16. Top flange 13 and bottom flange 14 extend perpendicularly from flat piece 8 on side plate 11. Similarly, top flange 15 and bottom flange 16 extend perpendicularly from flat piece 9 on side plate 12.

Side plates 11, 12 are also provided with corresponding rails 19, 20. Rails 19 extend perpendicularly from top flanges 13, 15. Similarly, rails 20 extend perpendicularly from bottom flanges 14, 16 as indicated. One pair of rails 19 or 20 can provide hanger support connection means while the other pair of rails can provide ground stab connection means. Rails 19, 20 in addition to flanges 13-16 provide added structural support to busway housing unit 10 and increased surface area to side plates 11, 12 for improved thermal radiation to the surrounding air.

Angulated slot 17 extends along one edge of top flange 13 on side plate 11 to receive a complementary angulated projection 18, which extends along top flange 15 on opposing side plate 12. A similar angulated slot 17' extends along bottom flange 16 of side plate 12 to receive a similar angulated projection 18', which extends along bottom flange 14 of side plate 11. Angulated slots 17, 17' and angulated projection 18, 18' provide interlocking means, which secure side plates 11 and 12 together.

Three or four busway or bus bar power conductors 27, hereafter "bus bars", are attached to busway housing unit 10. Each bus bar 27 represents a separate phase of a three-phase power distribution system. Bus bars 27 are secured to busway housing unit 10 with a plurality of braces 30 (not shown).

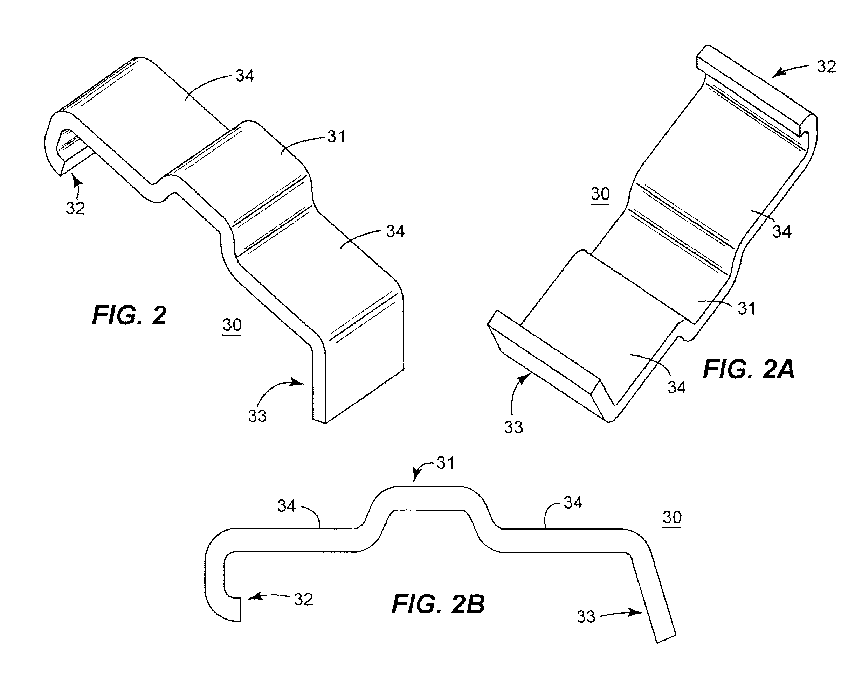

Referring now to FIG. 2 a top view of a brace in accordance with one embodiment of the present invention is shown generally at 30. Brace 30 comprises cuffed segment 31, hooked end 32, and flanged end 33. Brace 30 is approximately 1.5" wide and 0.125" in thickness. The length of brace 30 may vary according to the dimensions of busway housing unit 10.

In one particular embodiment, brace 30 comprises a rigid and resilient material such as steel, which provides important mechanical properties such as strength and durability. These mechanical properties are desirable, for example, when a busway is exposed to dynamic and thermal stresses as a result of a short circuit. Because brace 30 is located outside of busway housing 10, brace 30 has no influence on the electrical properties of the busway.

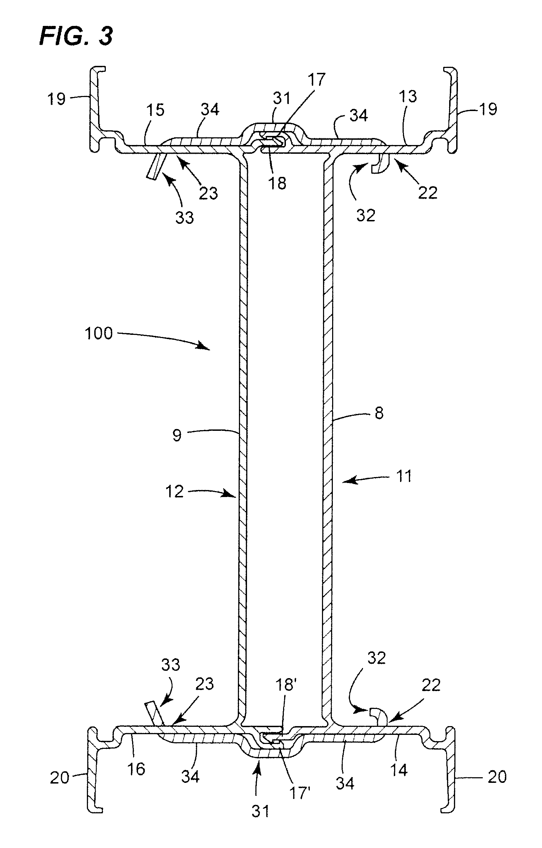

FIG. 3 illustrates a cross-section of an assembled busway housing unit 100 that includes a plurality of braces 30. Cuffed segment 31 is offset from flat segment 34 and accommodates the interlocking means of flanges 13-16. Specifically, angulated slots 17 and 17' fit directly inside cuffed segment 31, thus biasing the interlocking means of flanges 13-16. When cuffed segment 31 is in position directly on top of angulated slot 17, flat segment 34 sits directly on flanges 13 and 15. Similarly, when cuffed segment 31 is in position directly on top of angulated slot 17', flat segment 34 sits directly on flanges 14 and 16.

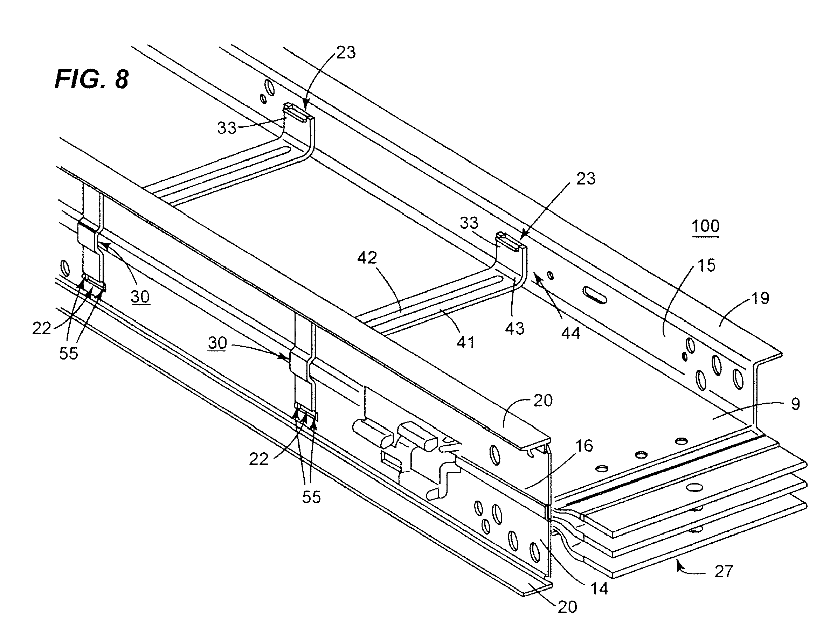

Furthermore, brace 30 may be interconnected with flanges 13, 15 and 14, 16 through slits 22 and 23. Hooked end 32 fits inside complementary slit 22, located on flanges 13 and 14. Similarly, flanged end 33 fits inside complementary slit 23, located on flanges 15 and 16. Slit 22 on flange 13 is located directly parallel to slit 22 on flange 14. Similarly, slit 23 on flange 15 is located directly parallel to slit 23 on flange 16. As seen in FIG. 8, slits 22 and 23 are located along identical and regular intervals along the length of side plates 11 and 12, respectively, on approximately 12" centers. The area of each slit 22 is dimensioned to receive hooked end 32 of brace 30. Similarly, the area of each slit 23 is dimensioned to receive flanged end 33 of brace 30.
Referring again to FIG. 3, to secure brace 30, hooked end 32 is inserted into slit 22.
Then, a rotational force is applied to brace 30 until flanged end 33 is adjacent to complementary slit 23. An axial force perpendicular to side plates 11, 12 is applied to flanged end 33. The rotational force coupled with the axial force allows flanged end 33 to completely engage slit 23 and secures brace 30 into position.

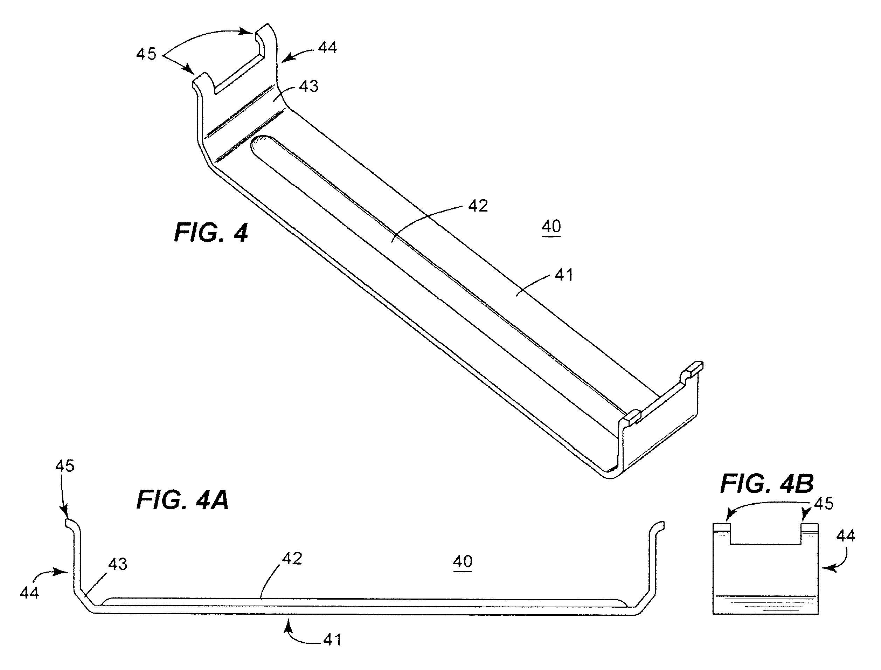

In accordance with another feature of the present invention, a plurality of brackets 40, 50 may be provided to further secure power busway housing unit 100. FIG. 4 shows a top view of a bracket 40 in accordance with another aspect of the invention. Bracket 40 comprises base 41 and a pair of flanges 44. Base 41 includes rib 42, which is a curved stiffening portion that runs longitudinally along the center of base 41. Flanges 44 extend perpendicularly from base 41 and comprise angled segment 43 and catch 45.

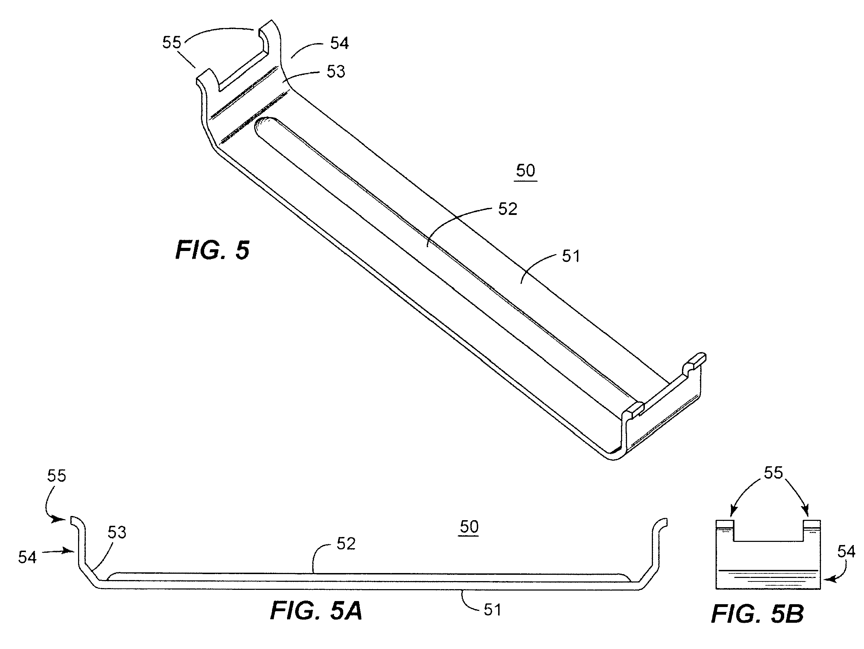

Similarly, bracket 50, shown in FIG. 5 comprises base 51 and a pair of flanges 54. Base 51 includes rib 52, which may be similar to rib 42. Flanges 54 also extend perpendicularly from base 51 and comprise angled segment 53 and catch 55.

Brackets 40, 50 are approximately 2.5" wide and 0.1" in thickness. The length of brackets 40, 50 are equal and may vary according to the dimensions of busway housing unit 10. More particularly, the length of bases 41, 51 may vary according to lengths of flat pieces 9 and 8, respectively. Furthermore, the distance between catches 45 and 55 is equal.

Brackets 40 and 50 are comprised of a rigid and resilient material such as steel, which provides important mechanical properties such as strength and durability. These properties are desirable, for example, when a busway is exposed to dynamic and thermal stresses as a result of a short circuit. Because brackets 40 and 50 are located outside of busway housing 10, brackets 40 and 50 have no influence on the electrical properties of the busway.

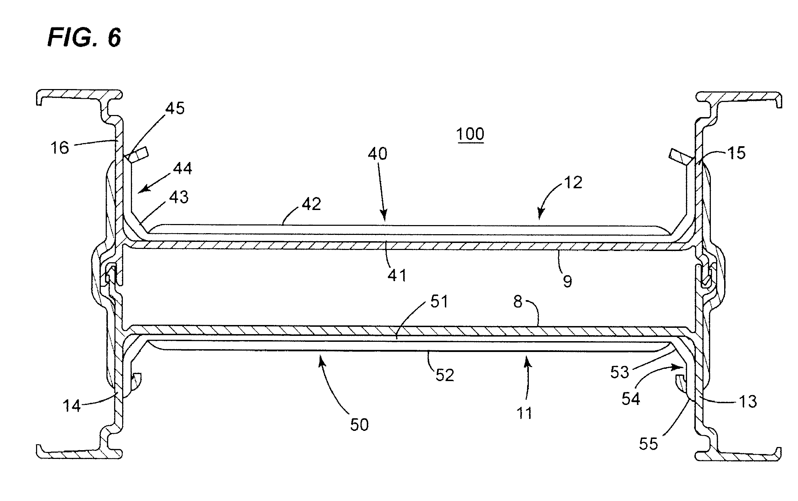

FIG. 6 illustrates the assembled busway housing unit 100 of FIG. 3 including a plurality of brackets 40, 50. Brackets 40, 50 are dimensioned and configured to further secure busway system 100 by providing supplementary reinforcement to braces 30. Base 41 of bracket 40 runs traversely along flat piece 9 on side plate 12 (FIG. 8). Rib 42 stiffens base 41 against flat piece 9 in order to prevent bracket 40 from lifting off side plate 12.

Angled segments 43 curve away from side plate 12. Angled segments 43 distribute the forces from bracket 40 onto side plate 12 for a more secure busway system 100. In addition, angled segments 43 allow bracket 40 to apply an opposing force to flanges 15, 16 to reduce wear on flanges 15, 16 and brace 30.

Furthermore, bracket 40 may be interconnected with each of flanges 15 and 16 through slits 23. Catch 45 hooks onto slits 23 discussed above. As seen in FIG. 8, the width of slits 23 is at least equal to the width of bracket 40. Furthermore, the length between catches 45 is at least equal to the width of brace 30. This ensures that catches 45 and either flanged end 33 of brace 30 can both fit inside slot 23 at the same time.

Referring again to FIG. 6, bracket 50 provides similar structure and functionality to side plate 11 that bracket 40 provides to side plate 12.

While the present invention has been described in connection with what are presently considered to be the most practical and preferred embodiments, it is to be understood that the present invention is not limited to these herein disclosed embodiments. Rather, the present invention is intended to cover all of the various modifications and equivalent arrangements included within the scope of the appended claims.

Aspects of the present invention are defined in the following numbered clauses:
1. A power busway assembly comprising:
   a pair of opposing non-ferrous metal apertured side plates, each of the plates having a U-shaped configuration comprising a pair of top and bottom flanges joined by a flat piece;
   means on one end of each of the flanges for interlocking the side plates together, the interlocking means comprising an angulated projection or an angulated slot;
   first rails extending from one of the pairs of flanges, the first rails providing hanger support connection means;
   second rails extending from another one of the pairs of flanges, the second rails providing ground stab connection means; and
   at least one brace interconnected with the flanges and being dimensioned and configured to bias the interlocking means together.
2. The power busway assembly of clause 1, wherein the side plates are extruded.
3. The power busway assembly of clause 1, wherein the non-ferrous metal is selected from the group consisting of aluminum and copper.
4. The power busway assembly of clause 1, further comprising:
   slits located along identical and regular intervals along the side plates.
5. The power busway assembly of clause 4, wherein the at least one brace comprises a plurality of braces and wherein each is interconnected with the flanges through the slits.
6. The power busway assembly of clause 5, wherein the plurality of braces comprise a cuffed segment, a hooked end, and a flanged end.
7. The power busway assembly of clause 6, wherein the cuffed segment accommodates said interlocking means.
8. The power busway assembly of clause 1, wherein the braces are formed from a rigid and resilient material.
9. The power busway assembly of clause 8, wherein the rigid and resilient material comprises steel.
10. The power busway assembly of clause 4, further comprising:
   at least one bracket interconnected with the flanges and the at least one bracket being dimensioned and configured to reinforce a pair of opposing braces.
11. The power busway assembly of clause 10, wherein the at least one bracket comprises a plurality of brackets and wherein each is interconnected with the flanges through the slits.
12. The power busway assembly of clause 11, wherein the plurality of brackets comprise a base and a pair of flanges.
13. The power busway assembly of clause 12,
   wherein the base comprises a rib; and
   wherein the pair of flanges comprise an angled segment and a catch.
14. The power busway assembly of clause 13,
   wherein the rib stiffens said base against said flat piece; and
   wherein the catch hooks onto the slits.
15. The power busway assembly of clause 11, wherein the plurality of brackets are formed from a rigid and resilient material.
16. The power busway assembly of clause 15, wherein the rigid and resilient material comprises steel.
17. A method of securing a busway housing to busway power conductors using a plurality of braces, the busway housing comprising a pair of opposing non-ferrous metal apertured side plates, the plates having a U-shaped configuration comprising a pair of top and bottom flanges joined by a flat piece and comprising slits, the plurality of braces comprising a hooked end and a flanged end, the method comprising:
   inserting the hooked end into one of the slits;
   rotating the brace until the flanged end is adjacent to another of the slits;
   providing an axial force to the flanged end, wherein the force is perpendicular to the side plates whereby the flanged end completely engages the another of the slits.
18. The method of clause 17, wherein the slits are located along identical and regular intervals along the side plates.
19. The method of clause 18, further comprising:
   securing the plurality of braces along the identical and regular intervals.
20. The method of clause 19, further comprising:
   interconnecting a plurality of brackets to the flanges through the slits.
21. The method of clause 20, further comprising:
   securing the plurality of brackets along the identical and regular intervals.

## Claims

1. A power busway assembly comprising:
a pair of opposing non-ferrous metal apertured side plates, each of the plates having a U-shaped configuration comprising a pair of top and bottom flanges joined by a flat piece;
means on one end of each of the flanges for interlocking the side plates together, the interlocking means comprising an angulated projection or an angulated slot;
first rails extending from one of the pairs of flanges, the first rails providing hanger support connection means;
second rails extending from another one of the pairs of flanges, the second rails providing ground stab connection means; and
at least one brace interconnected with the flanges and being dimensioned and configured to bias the interlocking means together.

2. The power busway assembly of claim 1, wherein the side plates are extruded.

3. The power busway assembly of claim 1 or claim 2, wherein the non-ferrous metal is selected from the group consisting of aluminum and copper.

4. The power busway assembly of any one of the preceding claims, further comprising:
slits located along identical and regular intervals along the side plates.

5. The power busway assembly of claim 4, wherein the at least one brace comprises a plurality of braces and wherein each of the plurality of braces is interconnected with the flanges through the slits.

6. The power busway assembly of any one of the preceding claims, wherein each of the plurality of braces comprises a cuffed segment, the cuffed segment accommodating the interlocking means.

7. The power busway assembly of any one of the preceding claims, further comprising:
at least one bracket interconnected with the flanges, the at least one bracket being dimensioned and configured to reinforce a pair of opposing braces.

8. The power busway assembly of claim 7, wherein the at least one bracket comprises a plurality of brackets and wherein each of the plurality of brackets is interconnected with the flanges through the slits.

9. The power busway assembly of claim 8, wherein the each of the plurality of brackets comprises a rib, the rib stiffening each of the plurality of brackets to the flat piece.

10. A method of securing a busway housing to busway power conductors using a plurality of braces, the busway housing comprising a pair of opposing non-ferrous metal apertured side plates, the plates having a U-shaped configuration comprising a pair of top and bottom flanges joined by a flat piece and comprising slits, the plurality of braces comprising a hooked end and a flanged end, the method comprising:
inserting the hooked end into one of the slits;
rotating the brace until the flanged end is adjacent to another of the slits;
providing an axial force to the flanged end, wherein the force is perpendicular to the side plates whereby the flanged end completely engages the another of the slits.
